# EUROPÄISCHE PATENTANMELDUNG

(11) **EP 3 862 626 A1**
(43) Veröffentlichungstag der Anmeldung: **11.08.2021**
(21) Anmeldenummer: 20155653.7
(22) Anmeldetag: 05.02.2020
(51) Int. Cl.: F21S 43/20, F21S 43/27, F21S 41/20, F21S 41/29, B29C 65/16

(54) **FAHRZEUGLEUCHTE MIT IN DER LICHTSCHEIBE VOR DER UM DIE LICHTÖFFNUNG UMLAUFENDEN SCHWEISSNAHT NACHTRÄGLICH ANGEORDNETER STREUSTRUKTUR**

(71) Anmelder: odelo GmbH, 70329 Stuttgart (DE)
(72) Erfinder: HORNUNG, Thorsten, 73760 Ostfildern (DE); RICKING, Thorsten, 71364 Winnenden (DE); ENGELSKIRCHEN, Matthias, 73249 Wernau (DE)
(74) Vertreter: Benninger, Johannes

(57) **Zusammenfassung**

Es wird eine Fahrzeugleuchte (01) mit einem von einer Lichtscheibe (02) und einem Leuchtengehäuse (03) wenigstens teilweise umschlossenen Leuchteninnenraum (04) beschrieben. Das Leuchtengehäuse (03) und die Lichtscheibe (02) sind an der dem Leuchtengehäuse (03) zugewandten Rückseite (20) der Lichtscheibe (02) durch eine Schweißnaht (05) miteinander verbunden. Im Inneren des Lichtscheibenmaterials ist aus Sicht eines auf die dem Leuchteninnenraum (04) abgewandte Vorderseite (24) der Lichtscheibe (02) blickenden Betrachters gesehen vor der Schweißnaht (05) eine angeordnete Streustruktur (06) angeordnet.

## Beschreibung

Die Erfindung betrifft eine Fahrzeugleuchte gemäß dem Oberbegriff des Anspruchs 1.

Insbesondere beschäftigt sich die Erfindung mit einer Kaschierung der im so genannten Warmdesign bei aktiver Lichtfunktion dunklen, um die Lichtöffnung umlaufenden Schweißnaht zwischen Lichtscheibe und Leuchtengehäuse einer Fahrzeugleuchte, insbesondere einer in Seitenwand- und Heckdeckelleuchte zweigeteilten Heckleuchte für ein Kraftfahrzeug.

Jede Fahrzeugleuchte, insbesondere Automobilleuchte, erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Beim Blick von außerhalb des Leuchteninnenraums auf die Lichtscheibe oder durch diese hindurch wird jede Lichtfunktion durch mindestens eine Leuchtfläche derart verwirklicht, dass jeder Lichtfunktion zumindest während deren momentaner Erfüllung wenigstens eine Leuchtfläche zu deren Verwirklichung zur Verfügung steht.

Für die einzelnen Lichtfunktionen sind zum Teil unterschiedliche Helligkeiten bzw. Sichtweiten sowie zum Teil unterschiedliche Lichtfarben zugeordnet.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Eine Fahrzeugleuchte umfasst beispielsweise einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Wenigstens einer Lichtquelle des Leuchtmittels einer Fahrzeugleuchte können ein oder mehrere zur Ausformung einer Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse ist heutzutage wie die Lichtscheibe auch meist aus einem Kunststoff hergestellt. Dies schafft sowohl einen großen Freiraum hinsichtlich der Formgebung, als auch die Anwendung prozesstechnisch vorteilhafter, wasser- und auch gasdichter Verbindungsverfahren beispielsweise zwischen Lichtscheibe und Leuchtengehäuse, wie etwa dem Laserdurchstrahlschweißen.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Ein generelles Ziel bei der Entwicklung von Fahrzeugkomponenten, zu denen auch Fahrzeugleuchten zählen, sind geringe Herstellungskosten einhergehend mit einer sich kostensenkend auf die Herstellungskosten auswirkenden geringen Ausschussquote.

Zumindest die Lichtscheiben und die Leuchtengehäuse sowie soweit technisch möglich bevorzugt auch andere Bauteile von modernen Fahrzeugleuchten werden daher vorteilhaft weitgehend aus Kunststoffen insbesondere im Spritzgussverfahren hergestellt, da diese einen großen Freiraum bei der Formgestaltung bei im Vergleich etwa zu beispielsweise für Lichtscheiben ursprünglich verwendetem Mineralglas kostengünstiger Herstellung und Einfachheit im weiteren Umgang, wie etwa bei der Handhabung und Lagerung der fertigen Bauteile sowie der Weiterverarbeitung und Montage zur fertigen Leuchte einhergehend mit einer insbesondere zwischen Lichtscheibe und Leuchtengehäuse zum Schutz vor Witterungseinflüssen zumindest spritzwasserdichten Verbindung zweier oder mehrerer Teile direkt stoffschlüssig und frei von Hilfsmitteln, wie etwa Dichtungen, miteinander ermöglichen.

Bis auf wenige Ausnahmen wird eine Fahrzeugleuchte in der Regel von einem opaken, intransparenten Leuchtengehäuse und einer wenigstens eine nicht vom Leuchtengehäuse eingenommene Lichtöffnung verschließenden, transparenten Lichtscheibe umschlossen. Besonders vorteilhaft sind beide Teile beispielsweise um die Lichtöffnung umlaufend am auf der die Lichtöffnung umgebenden Wandung des Leuchtengehäuses aufliegenden Rand der Lichtscheibe beispielsweise durch Reibschweißen oder besonders bevorzugt durch Laserdurchstrahlschweißen miteinander verschweißt.

Grundsätzlich können die beiden Teile auch miteinander verklebt sein.

Unabhängig von der Art der um die Lichtöffnung umlaufenden Verbindung zwischen Leuchtengehäuse und Lichtscheibe wird hierfür nachfolgend der Begriff Schweißnaht verwendet.

Beim Laserdurchstrahlschweißen werden zunächst die miteinander zu verbindenden Kunststoff-Bauteile, beispielsweise die Lichtscheibe und das Leuchtengehäuse, von denen eines für die Wellenlänge des eingesetzten Laserstrahls transparent sein muss, relativ zueinander ausgerichtet positioniert und unter leichtem Andruck aneinander fixiert. Anschließend werden die beiden Kunststoff-Bauteile, wie etwa die Lichtscheibe und/oder das Leuchtengehäuse vermittels des durch das transparente Kunststoff-Bauteil, insbesondere die Lichtscheibe hindurch auf den Bereich der herzustellenden Schweißnaht gerichteten Laserstrahls angeschmolzen. Dabei schmilzt das die Laserenergie absorbierende Kunststoff-Material des intransparenten Kunststoff-Bauteils im Bereich der Schweißnaht an. Durch den leichten Andruck wird auch das Kunststoff-Material des gegenüberliegenden, transparenten Kunststoff-Bauteils leicht angeschmolzen und die Schmelzen vermengen sich. Wird die Einwirkung des Laserstrahls aufgehoben erstarrt das angeschmolzene Material unter Eingehen einer stoffschlüssigen Verbindung zwischen Leuchtengehäuse und Lichtscheibe.

Im Bereich dieser Schweißnaht können sich keine Lichtquellen oder Reflektoren hinter der Lichtscheibe befinden. Damit steht dieser Bereich auch nicht als Leuchtfläche zur Verfügung. Dadurch ergibt sich um die Leuchte herum ein um die Lichtöffnung umlaufender Rand, durch den kein Licht in Richtung eines von außerhalb des Leuchteninneraums auf die Lichtscheibe blickenden Betrachters abgestrahlt wird.

Als Heckleuchten ausgeführte Fahrzeugleuchten bestehen oft aus zwei Teilleuchten, einer auch als Seitenwandleuchte bezeichneten ersten Teilleuchte in der Seitenwand und einer auch als Heckdeckelleuchte bezeichneten zweiten Teilleuchte im Heckdeckel des Fahrzeugs. Jede der beiden bei geschlossenem Heckdeckel nebeneinander am Fahrzeug angeordneten Teilleuchten umfasst einen von einem eigenen Teilleuchtengehäuse und einer eigenen Teillichtscheibe umschlossenen Teilleuchteninnenraum, in dem ein oder mehrere Leuchtmittel zur Erfüllung und/oder zum Beitrag zu einer oder mehreren Lichtfunktionen der jeweiligen Teilleuchte und/oder der beide Teilleuchten umfassenden Fahrzeugleuchte ganz oder teilweise beherbergt sind.

Zwischen den beiden Teilleuchten entsteht eine nichtleuchtende Lücke, die sich aus dem nichtleuchtenden Rand der Seitenwandleuchte, der Fuge zwischen Seitenwand und Heckdeckel und dem nichtleuchtenden Rand der Heckdeckelleuchte zusammensetzt.

Wird nun ein und dieselbe Lichtfunktion zumindest zeitweilig vermittels beider Teilleuchten erfüllt, so entsteht zwischen den über die Fuge hinweg benachbarten, die Lichtfunktion in der einen und in der anderen Teilleuchte gleichzeitig momentan erfüllenden Leuchtflächen eine dunkle Lücke.

Diese dunkle Lücke wird als störend empfunden. Es wird daher versucht sie so schmal wie möglich zu halten.

Die Lichtscheibe kann im Bereich der umlaufenden Schweißnaht der Verbindung zwischen Lichtscheibe und Leuchtengehäuse einer Fahrzeugleuchte, welcher kurz als Schweißrand bezeichneter Bereich den beim Blick von außerhalb des Leuchteninnenraums auf die Lichtscheibe die Schweißnaht überdeckenden Rand umfasst, bis dato nicht mit vertretbarem Aufwand hinterleuchtet werden. Hierdurch verbleibt bei voll ausgeleuchteter Fahrzeugleuchte immer ein dunkler Rand um die Lichtscheibe herum.

Dies führt bei in Seitenwand- und Heckdeckelleuchte zweigeteilten Heckleuchten, welche beide zugleich wenigstens einer Lichtfunktion beitragen, zu einem dunklen Abschnitt zwischen über einen notwendigen Trennungsspalt zwischen Seitenwand- und Heckdeckelleuchte hinweg unmittelbar benachbarten, der selben Lichtfunktion zugeordneten, jedoch in unterschiedlichen Teilleuchten beherbergten Leuchtflächen.

Bisherige Ansätze, diese Lücke zu reduzieren, sind insbesondere eine möglichst geringe Fuge zwischen Seitenwand und Heckdeckel und ein möglichst schmaler Schweißrand um die Leuchte.

Verschiedene Lösungsansätze und Umsetzungen bestehen in einer Anordnung lichttechnischer Strukturen am Leuchtenrand. Diese Lösungsansätze sind oft aufwändig und damit teuer in der Leuchtenproduktion. Bei Leuchten, bei denen Lichtscheibe und Gehäuse im Laserdurchstrahlschweißverfahren miteinander verschweißt werden, sind zudem keine lichtlenkenden oder -streuenden Elemente im Lichtscheibenbereich in der Draufsicht auf die Lichtscheibe beim Blick von außerhalb des Leuchteninnenraums gesehen vor der Schweißfläche des um die Lichtöffnung umlaufenden Schweißrands möglich, weil bei diesem Schweißverfahren die Schweißkontur durch die Lichtscheibe hindurch mit Laserlicht erwärmt wird. Somit muss der Laserstrahl die Schweißkontur durch die Lichtscheibe hindurch erreichen können, was durch lichtlenkende oder - streuende Elemente im Lichtscheibenbereich des Schweißrands verhindert werden würde.

Einzig wirtschaftlich vertretbare Maßnahme, um den dunklen Abschnitt zwischen den Teilleuchten einer in zwei Teilleuchten, nämlich in Heckdeckelleuchte und Seitenwandleuchte zweigeteilten, als Heckleuchte ausgeführten Fahrzeugleuchte möglichst klein zu halten, ist damit bislang ein möglichst geringes Spaltmaß der die beiden Teilleuchten voneinander trennenden Fuge.

Eine Aufgabe der Erfindung ist die Bereitstellung einer wirtschaftlich vertretbaren Maßnahme, den kurz als Schweißrand bezeichneten Bereich einer Lichtscheibe einer Fahrzeugleuchte, welcher den beim Blick von außerhalb des Leuchteninnenraums auf die Lichtscheibe die um die Lichtöffnung umlaufende Schweißnaht der Verbindung zwischen Lichtscheibe und Leuchtengehäuse überdeckenden Rand umfasst, zu hinterleuchten.

Insbesondere ist es eine Aufgabe der Erfindung, eine Fahrzeugleuchte bereitzustellen, welche bei einer in zwei durch eine Fuge getrennte Teilleuchten, beispielsweise eine Seitenwandleuchte und eine Heckdeckelleuchte zweigeteilten Ausgestaltung während der zumindest zeitweiligen Erfüllung ein und dieselben Lichtfunktion vermittels zweier über die Fuge hinweg benachbarter Leuchtflächen in den beiden Teilleuchten eine kleinstmögliche dunkle Lücke zwischen den über die Fuge hinweg benachbarten, die Lichtfunktion in der einen und in der anderen Teilleuchte gleichzeitig momentan erfüllenden Leuchtflächen aufweist.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung löst die ihr zu Grunde liegende Aufgabe durch Überdecken der Schweißnaht durch in die Lichtscheibe eingelaserte, beispielsweise eine Vielzahl von Streupunkte umfassende Streustrukturen.

Der Gegenstand der Erfindung betrifft demnach eine Fahrzeugleuchte mit mindestens einem wenigstens eine Lichtöffnung aufweisenden Leuchtengehäuse und zumindest einer mittels einer um die Lichtöffnung ganz oder teilweise umlaufenden Schweißnaht mit diesem verbundenen, die Lichtöffnung verschließenden Lichtscheibe und mit in der Lichtscheibe vor der um die Lichtöffnung umlaufenden Schweißnaht nachträglich angeordneter Streustruktur.

Die Fahrzeugleuchte weist mindestens einen von wenigstens einem Leuchtengehäuse und zumindest einer Lichtscheibe ganz oder teilweise umschlossenen Leuchteninnenraum auf.

Beim Blick von außerhalb des Leuchteninnenraums auf die Lichtscheibe weist die Fahrzeugleuchte eine in der Lichtscheibe zumindest vor der um die Lichtöffnung umlaufenden Schweißnaht nachträglich angeordneter Streustruktur auf.

Diese wegen ihrer Eigenschaft auch als Lichtstreuungsstruktur bezeichnete Streustruktur ist nachträglich, das heißt nach der Verbindung der Lichtscheibe mit dem Leuchtengehäuse durch Herstellung der Lichtscheibe und Leuchtengehäuse verbindenden Schweißnaht, vermittels Laserinnengravur eingebracht.

Eine Laserinnengravur besteht bevorzugt aus einer Vielzahl von beispielsweise voneinander separaten Innengravurpunkten. Jeder Innengravurpunkt liegt innerhalb des die Lichtscheibe bildenden Körpers. In der Gesamtbetrachtung ergeben die Innengravurpunkte eine Lichtstreuungsstruktur.

Die Innengravurpunkte sind per Laserinnengravur nachträglich, das heißt nach der Herstellung der die Lichtscheibe mit dem Leuchtengehäuse verbindenden Schweißnaht in den kurz als Schweißrand bezeichneten, die umlaufende Schweißnaht der Verbindung zwischen Lichtscheibe und Leuchtengehäuse einer Fahrzeugleuchte und/oder der Verbindung zwischen Teillichtscheibe und Teilleuchtengehäuse einer in zwei oder mehrere Teilleuchten, wie etwa in Seitenwandleuchte und in Heckdeckelleuchte, zwei- oder mehrgeteilten Fahrzeugteilleuchte überdeckenden Bereich der Lichtscheibe eingebracht, um die Lichtstreuungsstruktur zu bilden, durch welche Lichtstreuungsstruktur aus der Lichtöffnung austretendes Licht in den Schweißrand eingekoppelt und von dort aus in Richtung eines von außerhalb des Leuchteninnenraums auf die Lichtscheibe blickenden Betrachters gelenkt wird.

Die Lichtscheibe ist demnach erfindungsgemäß in ihrem den beim Blick von außerhalb des Leuchteninnenraums auf die Lichtscheibe die Schweißnaht überdeckenden Bereich umfassenden Schweißrand ganz oder teilweise mit der Laserinnengravur versehen. Die Laserinnengravur besteht bevorzugt aus einer Vielzahl von voneinander separaten Innengravurpunkten. Jeder Innengravurpunkt liegt innerhalb des den Schweißrand bildenden Teils der Lichtscheibe.

In der Gesamtbetrachtung ergeben die Innengravurpunkte eine Vielzahl von in dem den Schweißrand umfassenden Teilvolumen der Lichtscheibe liegenden, bei einer Betrachtung der Lichtscheibe von außerhalb des Leuchteninnenraums vor der Schweißnaht befindlichen Streustellen oder -punkten, welche die gleichmäßige Verteilung des durch die ansonsten klare und zunächst auch in nur einem Spritzgusstakt klar hergestellte Lichtscheibe hindurchtretenden Lichts über den gesamten, um die Lichtöffnung umlaufenden Schweißrand durch eine Streuung des Lichts begünstigen. Dementsprechend ausgeleuchtet erscheint der Schweißrand im Vergleich zu einer auch im Schweißrand vollständig klaren Lichtscheibe.

Das nachträgliche Einbringen der Lichtstreuungsstruktur vermittels Laserinnengravur in den Schweißrand erlaubt die Anwendung des Laserdurchstrahlschweißens zur Herstellung der Schweißnaht vor der Herstellung der Lichtstreuungsstruktur per Laserinnengravur.

Im Vergleich zu einer in einem mehrstufigen Spritzgussprozess hergestellten Mehrkomponenten-Lichtscheibe mit beispielsweise milchigem und/oder diffusem umlaufendem Schweißrand und von diesem umgebenem, klarem Lichtdurchtrittsbereich ist durch die Erzeugung von Streustellen durch Laserinnengravur in einer in einem Takt hergestellten, klaren Lichtscheibe eine Kosteneinsparung erzielbar, weil einerseits das Spritzgusswerkzeug wesentlich kostengünstiger ist, als eines mit für einen mehrstufigen Spritzgussprozess zu betätigenden Schiebern oder dergleichen, und andererseits durch die nicht notwendige Betätigung von zur Herstellung von Mehrkomponentenspritzgussteilen erforderlichen Schiebern oder dergleichen eine höhere Taktung gefahren werden kann bei gleichzeitig geringerer Ausschussquote.

Die Taktung kann dabei als der Quotient der Anzahl von Optikkörpern zur Zeit, innerhalb der diese Anzahl von Optikkörpern hergestellt wird, beschrieben werden.

Darüber erlaubt eine klare, transparente Ausführung die Anwendung des Laserdurchstrahlschweißens für die Herstellung der die Lichtscheibe mit dem Leuchtengehäuse verbindenden Schweißnaht.

Die um die Lichtöffnung umlaufende Schweißnaht ist vorzugsweise mittels Laserdurchstrahlschweißen hergestellt.

Demnach sind die Lichtscheibe und das Leuchtengehäuse der Fahrzeugleuchte bevorzugt per Laserdurchstrahlschweißen miteinander verbunden.

Bei der Fahrzeugleuchte handelt es sich vorzugsweise um eine in mehrere Teilleuchten mehrgeteilte Fahrzeugleuchte.

Jede Teilleuchte umfasst einen von mindestens einer Teillichtscheibe und einem Teilleuchtengehäuse mit wenigstens einer von der Teillichtscheibe verschlossenen Teillichtöffnung zumindest teilweise umgebenen Teilleuchteninnenraum. Jeder Teilleuchteninnenraum jeder Teilleuchte beherbergt wenigstens ein Leuchtmittel zur Erfüllung und/oder zum Beitrag zu ein- und derselben Lichtfunktion der Fahrzeugleuchte.

Bevorzugt handelt es sich um eine in zwei Teilleuchten zweigeteilte Fahrzeugleuchte.

Die Fahrzeugleuchte mit zwei Teilleuchten ist besonders bevorzugt in eine Heckdeckelleuchte und in eine Seitenwandleuchte zweigeteilt. Bei dieser Fahrzeugleuchte ist demnach eine ihrer beiden Teilleuchten als eine Heckdeckelleuchte ausgeführt und die verbleibende Teilleuchte als eine Seitenwandleuchte.

Wenigstens in denjenigen zumindest Teile der Schweißränder der Teillichtscheiben der Teilleuchten umfassenden Partien der Teillichtscheiben, die sich aus der Sicht eines auf die den Teilleuchteninnenräumen abgewandte Vorderseite der Teillichtscheiben blickenden Betrachters gesehen vor den um die Teillichtöffnungen umlaufenden Schweißnähten befinden, und welche lediglich durch eine Fuge zwischen zwei Teilleuchten beabstandet unmittelbar aneinander angrenzen, ist im Inneren des Lichtscheibenmaterials mindestens eine Streustruktur angeordnet, welche sich aus der Sicht des auf die den Teilleuchteninnenräumen abgewandte Vorderseite der Teillichtscheiben blickenden Betrachters gesehen vor den um die Teillichtöffnungen umlaufenden Schweißnähten befindet.

Besonders bevorzugt tragen mehrere Teilleuchten einer in mehrere Teilleuchten mehrgeteilten Fahrzeugleuchte, beispielsweise beide Teilleuchten einer in Seitenwand- und Heckdeckelleuchte zweigeteilten, als Heckleuchte ausgeführten Fahrzeugleuchte, durch Bereitstellung jeweils mindestens einer Leuchtfläche in zumindest zwei der Teilleuchten, zumindest zeitweilig zur Erfüllung ein und derselben Lichtfunktion der Fahrzeugleuchte bei.

Dabei sind wenigstens zwei der Leuchtflächen in unterschiedlichen Teilleuchten beherbergt und über einen notwendigen Trennungsspalt zwischen zwei Teilleuchten, wie etwa über die Fuge zwischen Seitenwand- und Heckdeckelleuchte hinweg, unmittelbar benachbart.

Darüber hinaus tragen die der selben Lichtfunktion zugeordneten, jedoch in unterschiedlichen Teilleuchten beherbergten Leuchtflächen zumindest zeitweilig ein und derselben Lichtfunktion der Fahrzeugleuchte bei.

Es ist ersichtlich, dass die Erfindung:
- zur Beseitigung des aus Sicht eines von außerhalb des Leuchteninnenraums auf die Lichtscheibe blickenden Betrachters vor der Schweißnaht liegenden, um die Lichtöffnung umlaufenden dunklen Rands, und/oder
- zur Verkleinerung des den dunklen Rand und die Fuge zwischen zwei benachbarten Teilleuchten einer in mehrere Teilleuchten mehrgeteilten Fahrzeugleuchte umfassenden dunklen Abschnitts zwischen ein und derselben Lichtfunktion zugeordneten, jedoch in unterschiedlichen Teilleuchten beherbergten und über die Fuge hinweg unmittelbar benachbarten Leuchtflächen die nachträgliche Einbringung einer Lichtstreuungsstruktur per Laserinnengravieren wenigstens im zumindest die Schweißnaht aus Sicht eines von außerhalb des Leuchteninnenraums auf die Lichtscheibe blickenden Betrachters überdeckenden Randbereich der Lichtscheibe der fertigen Fahrzeugleuchte vorsieht.

Nach dem Verschweißen der Leuchte mit einem beliebigen Schweißverfahren, wird von außen mit einem Laser eine Streustruktur im Innern der Lichtscheibe erzeugt. Diese in das gegebenenfalls eingefärbte, klare, transparente Material der Lichtscheibe, die vorzugsweise einem Kunststoff, besonders bevorzugt Polymethylmethacrylat (PMMA) oder Polycarbonat (PC) besteht, eingelaserte Streustruktur liegt im Innern des Lichtscheibenmaterials und aus Sicht des Betrachters vor der Schweißnaht. Die Dichte der beispielsweise vermittels einer Vielzahl von Innengravurpunkten hergestellten Streustruktur kann vom Leuchtenrand Richtung Lichtscheibenmitte kontinuierlich abnehmen, um einen visuell sanften Übergang zwischen transparenter Lichtscheibe und streuendem Lichtscheibenrand zu schaffen. Gleichzeitig wird dadurch im kurz auch als Warmzustand oder Warmdesign bezeichneten eingeschalteten Zustand eine homogen leuchtende Fläche erreicht.

Zusätzlich können Lichtumlenkstrukturen auf der Lichtscheibeninnenseite vorgesehen sein, welche Licht vom Leuchteninnenraum derart in die Lichtscheibe einkoppeln, dass dieses innerhalb der durch die Lichtscheibe aufgespannten Fläche propagiert.

Solche Lichtumlenkstrukturen sind teilweise ohnehin vorgesehen, um die gesetzlichen Anforderungen an die Lichtverteilung einzelner Lichtfunktionen zu erfüllen.

Demnach kann zusätzlich zu der nachträglich in die Lichtscheibe im Bereich des Schweißrands eingelaserten Streustruktur Licht so in die Lichtscheibe eingekoppelt werden, dass es durch Totalreflexion im Innern der Lichtscheibe zu der eingelaserten Streustruktur geleitet wird. Die Lichteinkopplung kann durch geeignete, beispielsweise auf der Innenseite der Lichtscheibe angeordnete, beispielsweise Geometrieelemente umfassende Lichtumlenkstrukturen, wie beispielsweise Prismen, erfolgen, die oftmals ohnehin erforderlich sind, um die gesetzlichen Anforderungen an die geometrische Sichtbarkeit der Leuchte zu erfüllen. Die erwähnten Lichtumlenkstrukturen, wie etwa Geometrieelemente, können im fertig zusammengebauten Zustand der Fahrzeugleuchte betrachtet ganz oder teilweise um die Lichtöffnung umlaufend, in der die Lichtöffnung abdeckenden Fläche der Lichtscheibe, beispielsweise vom Rand zwischen der Schweißnaht und der Lichtöffnung beispielsweise unmittelbar nach innen zur Lichtöffnung hin angrenzend vorgesehen sein.

Erreicht das beispielsweise mittels der Lichtumlenkstrukturen, wie etwa Geometrieelemente, und/oder aufgrund seines Öffnungswinkels in die Lichtscheibe eingekoppelte Licht die Streustruktur, so streut die Streustruktur dieses in der Lichtscheibe geleitete Licht Richtung Betrachter aus der Lichtscheibe heraus und erzeugt so eine leuchtende Fläche, die sich über die Schweißnaht hinweg bis an den Außenrand der Lichtscheibe erstreckt. Damit kann bei einer beispielsweise als eine in Seitenwandleuchte und Heckdeckelleuchte zweigeteilte Heckleuchte ausgeführten Fahrzeugleuchte die nichtleuchtende Lücke zwischen Seitenwandleuchte und Heckdeckelleuchte auf das Maß der Fuge zwischen Seitenwandleuchte und Heckdeckelleuchte verringert werden.

Wichtig ist hervorzuheben, dass die Erfindung verwirklicht sein kann durch eine Fahrzeugleuchte mit einem von einer Lichtscheibe und einem Leuchtengehäuse wenigstens teilweise umschlossenen Leuchteninnenraum, wobei das Leuchtengehäuse und die Lichtscheibe an der dem Leuchtengehäuse zugewandten Rückseite der Lichtscheibe durch eine Schweißnaht miteinander verbunden sind, und wobei aus Sicht eines auf die dem Leuchteninnenraum abgewandte Vorderseite der Lichtscheibe blickenden Betrachters gesehen vor der Schweißnaht eine wenigstens im Bereich der Schweißnaht im Inneren des Lichtscheibenmaterials angeordnete Streustruktur angeordnet ist.

Die Streustruktur ist bevorzugt durch Laserinnenschweißen und/oder Laserinnengravieren erzeugt beziehungsweise hergestellt.

Die Streustruktur kann nach dem durch Verschweißen der Lichtscheibe mit dem Leuchtengehäuse erfolgten Zusammenbau der Fahrzeugleuchte erzeugt sein.

Nach dem Zusammenbau und Verschweißen einer Leuchte wird mittels Laser eine lichtstreuende Struktur in der Lichtscheibe der Fahrzeugleuchte erzeugt. Diese lichtstreuende Struktur liegt im Innern des Materialvolumens der Lichtscheibe, die Oberfläche der Lichtscheibe bleibt unverändert. Diese Streustruktur überdeckt beim Blick auf die Leuchte einen Teilbereich der Schweißnaht im diese aus Sicht eines von außerhalb des Leuchteninnenraums auf die Vorderseite der Lichtscheibe blickenden Betrachters gesehen überdeckenden, kurz als Schweißrand bezeichneten Bereich der Lichtscheibe. Im so genannten Warmzustand bei vereinfacht ausgedrückt eingeschalteter Leuchte, wird von dieser eingebrachten Streustruktur Licht in Richtung Betrachter gestreut, so dass der Bereich vor der Schweißrippe leuchtet. Dazu kann es vorteilhaft sein, Licht gezielt durch Lichtumlenkstrukturen, wie etwa Prismen oder andere geeignete Geometrieelemente so in die Lichtscheibe einzukoppeln, dass es durch Totalreflexion zu den eingelaserten Streustrukturen geleitet wird.

Die mittels Laserstrahlung erzeugte Streustruktur kann beispielsweise aus zahlreichen streuenden zylinderförmigen Bereichen im Material zusammengesetzt sein. Um ein homogen leuchtendes Erscheinungsbild zu erhalten, kann es vorteilhaft sein, die Stärke der Lichtstreuung ortsabhängig zu variieren. Beispielsweise kann die Lichtstreuung Richtung Lichtscheibenrand kontinuierlich zunehmen. Technisch kann dies beispielsweise durch unterschiedlich lange und/oder unterschiedlich dicht platzierte lichtstreuende Zylinderstrukturen erreicht werden. Auch die Tiefe und/oder Achsrichtung, mit der die lichtstreuenden Zylinderstrukturen in die Lichtscheibe eingebracht werden, kann variiert werden, um ein homogenes Erscheinungsbild im so genannten Warmzustand zu erhalten.

Die beispielsweise durch eine Achslage bestimmbare Ausrichtung und die Dichte der kurz als Streuzylinder bezeichneten lichtstreuenden Zylinderstrukturen beeinflusst die Richtungsverteilung des abgestrahlten Lichts. Die Streuzylinder werden bei einer als Heckleuchte ausgeführten Fahrzeugleuchte bevorzugt so eingebracht, dass möglichst viel des Lichts nach Fahrzeughinten in Richtung der Fahrzeuglängsachse gestreut wird.

Die Fahrzeugleuchte kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.
- Die nichtleuchtende Lücke zwischen zwei der selben Lichtfunktion beitragenden oder die selbe Lichtfunktion erfüllenden, jedoch in unterschiedlichen unmittelbar benachbarten Teilleuchten beherbergten Leuchtflächen im Warmdesign, beispielsweise zwischen Heckdeckelleuchte und Seitenwandleuchte einer in die beiden entsprechend ausgebildeten Teilleuchten zweigeteilten, als Heckleuchte ausgebildeten Fahrzeugleuchte, wird auf das die Breite der Fuge angebende Spaltmaß verringert.
- Die kurz als Laserschweißbarkeit bezeichnete Möglichkeit, bei der Fahrzeugleuchte die das Leuchtengehäuse mit der Lichtscheibe verbindenden Schweißnaht vermittels Laserdurchstrahlschweißen herzustellen, bleibt erhalten.
- Durch eine insbesondere per nachträglicher Laserinnengravur mögliche Variation der Streustruktur vom Lichtscheibenrand zur Schweißnaht hin, kann ein kontinuierlicher Übergang zwischen transparenter Lichtscheibe und streuendem Bereich am Lichtscheibenrand erhalten werden.

- Die zumindest abschnittsweise Licht in Richtung eines auf die dem Leuchteninnenraum abgewandte Vorderseite der Lichtscheibe blickenden Betrachters umlenkende Streustruktur vergrößert die kurz als Leuchtfläche bezeichnete, der Verwirklichung von einer oder mehreren Lichtfunktionen der Fahrzeugleuchte dienende leuchtende Fläche und kann damit sowohl zur Erfüllung der gesetzlichen Mindestanforderungen an die Größe der leuchtenden Fläche einer Lichtfunktion beitragen, als auch einer nachhaltigen Steigerung der Verkehrssicherheit durch Verbesserung der Sichtbarkeit und durch Verstärkung der Lichtabgabe in diese Richtung beitragen.
- Durch eine Vergrößerung der Leuchtfläche trägt die Streustruktur dazu bei, dass der maximal gesetzlich zulässige Abstand zwischen zwei in unterschiedlichen Teilleuchten beherbergten, zumindest zeitweilig ein und die selbe Lichtfunktion zeitgleich verwirklichender Leuchtflächen eingehalten wird.

Denkbar ist, anstelle von eingelaserten Streuzentren ein volumenstreuendes Material im Mehrtaktspritzgussverfahren in die Lichtscheibe einzubringen. Ein kontinuierlicher Übergang zwischen nichtstreuender Lichtscheibe und streuendem Bereich ist damit jedoch nicht umsetzbar. Es entsteht stets eine harte Kante. Zudem ist eine solche Lichtscheibe nicht mehr im Laserdurchstrahlschweißverfahren verschweißbar, weil das Laserlicht durch die bereits vor dem Schweißprozess vorhandene Streustruktur gestreut werden würde.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:

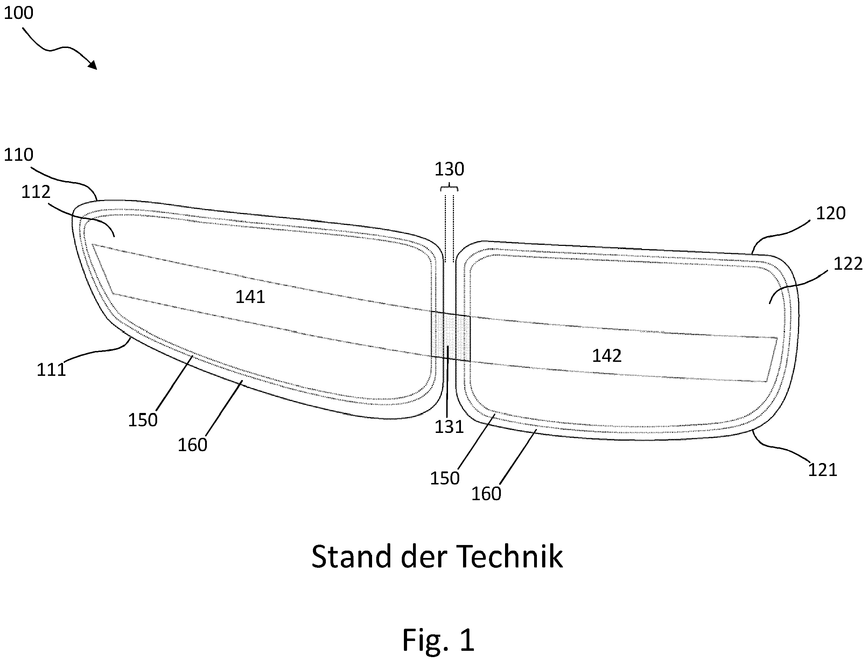

- Fig. 1: eine in Heckdeckelleuchte und Seitenwandleuchte zweigeteilte, als Heckleuchte ausgeführte Fahrzeugleuchte nach dem Stand der Technik in perspektivischer Ansicht mit einem sich während der zeitgleichen Verwirklichung ein und der selben Lichtfunktion der Fahrzeugleuchte mittels zweier in verschiedenen der beiden Teilleuchten beherbergter Leuchtflächen zwischen Heckdeckelleuchte und Seitenwandleuchte ergebenden, nichtleuchtenden Bereich.

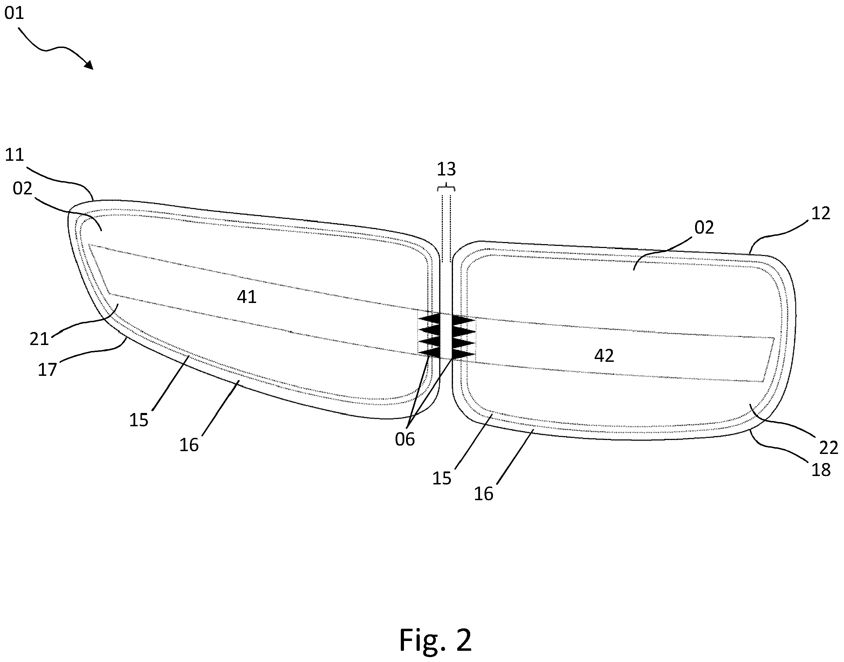

- Fig. 2: ein erstes Ausführungsbeispiel einer in zwei Teilleuchten, nämlich in Heckdeckelleuchte und Seitenwandleuchte zweigeteilten, als Heckleuchte ausgeführten Fahrzeugleuchte mit eingelaserten Streustrukturen zur Überdeckung der Schweißnaht sowie zur Kaschierung eines nichtleuchtenden Bereichs zwischen den Teilleuchten in einer perspektivischen Draufsicht auf deren Lichtscheiben.

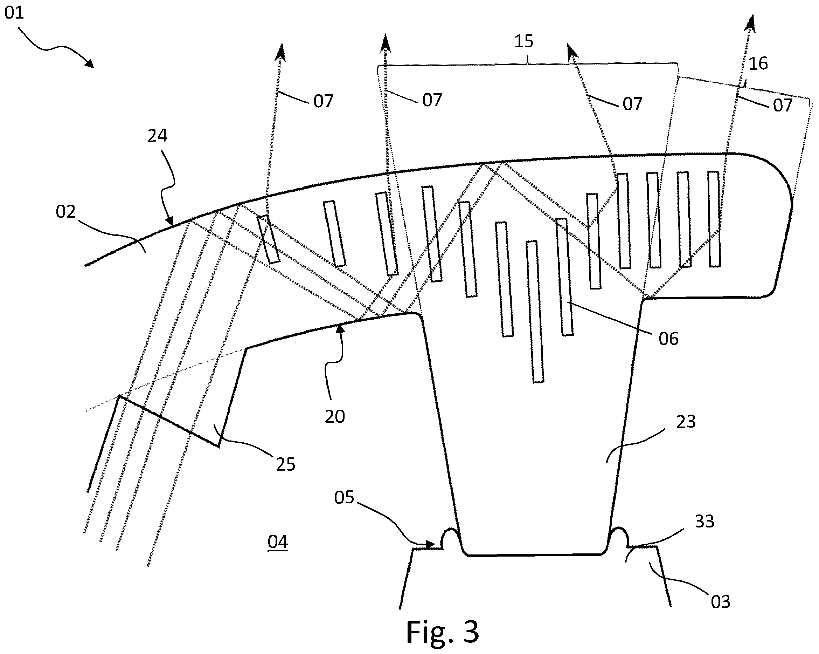

- Fig. 3: ein zweites Ausführungsbeispiel einer Fahrzeugleuchte mit eingelaserten Streustrukturen zur Überdeckung der Schweißkontur in einer Detailansicht eines Schnitts durch die wegen ihrer um die Lichtöffnung der Fahrzeugleuchte umlaufenden Ausgestaltung kurz auch als Schweißrand bezeichneten Schweißverbindung zwischen Leuchtengehäuse und Lichtscheibe. Die Streustrukturen sind hier zylinderförmige streuende Bereiche, die in Abstand, Länge, Tiefe und Ausrichtung angepasst sind, um ein homogen leuchtendes Erscheinungsbild im eingeschalteten Zustand zu erreichen und zugleich einen visuell sanften Übergang zwischen streuendem Bereich und transparenter Lichtscheibe im ausgeschalteten Zustand zu verwirklichen. Durch Prismen auf der zum Leuchteninneren weisenden Lichtscheibenseite wird Licht in die Lichtscheibe eingekoppelt. Exemplarische Strahlengänge sind eingezeichnet.

Eine in Fig. 1 ganz oder teilweise dargestellte, als Heckleuchte ausgeführte, zweigeteilte Fahrzeugleuchte 100 nach dem Stand der Technik besteht aus zwei Teilleuchten 110, 120, einer auch als Seitenwandleuchte 111 bezeichneten, zur Anordnung in der Seitenwand eines Fahrzeugs vorgesehenen ersten Teilleuchte 110 und einer auch als Heckdeckelleuchte 121 bezeichneten, zur Anordnung im Heckdeckel des Fahrzeugs vorgesehenen zweiten Teilleuchte 120. Jede der beiden bei geschlossenem Heckdeckel über eine Fuge 130 zwischen den beiden Teilleuchten 110, 120 hinweg nebeneinander am Fahrzeug angeordneten Teilleuchten 110, 120 umfasst einen von einem eigenen Teilleuchtengehäuse und einer eigenen Teillichtscheibe 112, 122 ganz oder teilweise umschlossenen Teilleuchteninnenraum. In jedem Teilleuchteninnenraum sind ein oder mehrere Leuchtmittel zur Erfüllung und/oder zum Beitrag zu einer oder mehreren Lichtfunktionen der jeweiligen Teilleuchte 110, 120 und/oder der beide Teilleuchten 110, 120 umfassenden Fahrzeugleuchte 100 ganz oder teilweise beherbergt.

Jede Lichtfunktion wird dabei durch eine Leuchtfläche verwirklicht. Zumindest eine Lichtfunktion der Fahrzeugleuchte 100 wird zumindest zeitweilig mittels zweier in verschiedenen Teilleuchten 110, 120 beherbergter Leuchtflächen 141, 142 zeitgleich verwirklicht.

In Fig. 1 ist dies am Beispiel einer Schlusslichtfunktion dargestellt. Gestrichelt eingezeichnete Vierecke in den Teillichtscheiben 112, 122 der beiden Teilleuchten 110, 120 stellen repräsentativ zwei die Schlusslichtfunktion zumindest zeitweilig zeitgleich verwirklichende Leuchtflächen 141, 142 dar, von denen die eine Leuchtfläche 141 in der ersten Teilleuchte 110 und die andere Leuchtfläche 142 in der zweiten Teilleuchte 120 beherbergt ist.

Kommt es nun am Beispiel der Schlusslichtfunktion repräsentativ erläutert zu einer zumindest zeitweiligen Erfüllung ein und dieselben Lichtfunktion vermittels in den beiden Teilleuchten 110, 120 beherbergten, bei geschlossenem Heckdeckel über die Fuge 130 hinweg benachbarten Leuchtflächen 141, 142, so entsteht zwischen den über die Fuge 130 hinweg benachbarten, die Lichtfunktion in der ersten Teilleuchte 110 und in der zweiten Teilleuchte 120 gleichzeitig momentan erfüllenden Leuchtflächen 141, 142 eine dunkle Lücke.

Diese dunkle Lücke wird durch einen in Fig. 1 schraffiert dargestellten nichtleuchtenden Bereich 131 gebildet, der sich aus dem nichtleuchtenden Rand der Seitenwandleuchte 111, der Fuge 130 zwischen der Seitenwandleuchte 111 und der Heckdeckelleuchte 121 und dem nichtleuchtenden Rand der Heckdeckelleuchte 121 zusammensetzt.

Bei dem jeweiligen nichtleuchtenden Rand handelt es sich um einen zwischen den beiden benachbarten Leuchtflächen 141, 142 liegenden Abschnitt eines kurz als Schweißrand bezeichneten Bereichs, welcher eine beim Blick von außerhalb des Leuchteninnenraums auf die Lichtscheibe die der Verbindung von Lichtscheibe und Leuchtengehäuse dienende Schweißnaht überdeckende Partie 150 der Lichtscheibe umfasst, sowie gegebenenfalls einen über diese Partie 150 nach außen, weg von einer vermittels der Lichtscheibe verschlossenen Lichtöffnung im Leuchtengehäuse, innerhalb welcher Lichtöffnung die der Verwirklichung von Lichtfunktionen dienenden Leuchtflächen liegen, überstehenden Rand 160. Dieser Schweißrand kann nicht hinterleuchtet werden.

Hierdurch verbleibt auch bei einer voll ausgeleuchteten Fahrzeugleuchte 100 immer ein dunkler Rand um die Lichtöffnung herum.

Genauso verhält es sich auch bei den Teilleuchten 110, 120 einer in mehrere Teilleuchten 110, 120 mehrgeteilten Fahrzeugleuchte 100. Die Teillichtscheiben 112, 122 können im Bereich der umlaufenden Schweißnaht der Verbindung zwischen der jeweiligen Teillichtscheibe 112, 122 und den jeweiligen Teilleuchtengehäuse der in Seitenwandleuchte 111 und in Heckdeckelleuchte 121 zweigeteilten Fahrzeugleuchte 100 nach dem Stand der Technik nicht hinterleuchtet werden, wodurch ein gegebenenfalls von der jeweiligen Schweißnaht aus gesehen weg von der Lichtöffnung überstehender, wie etwa ein gegebenenfalls im Bereich der Fuge 130 zur Fuge 130 hin über die jeweilige Schweißnaht überstehender Rand 160 auch nicht hinterleuchtet werden kann.

Dies führt bei einer in eine als Seitenwandleuchte 111 ausgebildete erste Teilleuchte 110 und in eine als Heckdeckelleuchte 121 ausgebildete zweite Teilleuchte 120 zweigeteilten, als Heckleuchte ausgeführten Fahrzeugleuchte 100, welche beiden Teilleuchten 110, 120 vermittels jeweils mindestens einer in jeder der Teilleuchten 110, 120 beherbergten Leuchtfläche 141, 142 zugleich wenigstens einer Lichtfunktion beitragen, bei geschlossenem Heckdeckel eines mit einer solchen Fahrzeugleuchte 100 ausgestatteten Fahrzeugs zu einem dunklen Abschnitt zwischen den über die notwendige Fuge 130 zwischen Seitenwandleuchte 111 und Heckdeckelleuchte 121 hinweg unmittelbar benachbarten, der selben Lichtfunktion zugeordneten, jedoch in unterschiedlichen Teilleuchten 110, 120 beherbergten Leuchtflächen 141, 142.

Eine in Fig. 2, Fig. 3 ganz oder in Teilen dargestellte Fahrzeugleuchte 01 umfasst wenigstens einen von zumindest einer Lichtscheibe 02 und mindestens einem Leuchtengehäuse 03 wenigstens teilweise umschlossenen Leuchteninnenraum 04.

Das Leuchtengehäuse 03 und die Lichtscheibe 02 sind an der dem Leuchtengehäuse 03 zugewandten Rückseite 20 der Lichtscheibe 02 durch eine Schweißnaht 05 miteinander verbunden.

Hierzu kann, wie in Fig. 3 dargestellt, eine an der Rückseite 20 der Lichtscheibe 02 abstehende Schweißrippe 23 angeformt sein, an deren der Lichtscheibe abgewandtem, vormals freien Ende die Lichtscheibe 02 mit dem Leuchtengehäuse 03 vermittels der Schweißnaht 05 stoffschlüssig verbunden ist.

Die stoffschlüssige Verbindung ist bevorzugt durch Laserdurchstrahlschweißen von der dem Leuchteninnenraum 04 abgewandten Vorderseite 24 der Lichtscheibe 02 ausgehend hergestellt.

Die Fahrzeugleuchte 01 zeichnet sich dadurch aus, dass aus Sicht eines auf die dem Leuchteninnenraum 04 abgewandte Vorderseite 24 der Lichtscheibe 02 blickenden Betrachters gesehen in Bezug auf eine um eine mittels der Lichtscheibe 02 verschlossene und vom Leuchtengehäuse 03 umgebene Lichtöffnung umlaufende Schweißnaht 05 zumindest abschnittsweise vor der Schweißnaht 05 eine wenigstens im Bereich der Schweißnaht 05 im Inneren des Lichtscheibenmaterials angeordnete, in Fig. 3 durch im Querschnitt durch die Lichtscheibe 02 eingezeichnete Vierecke angedeutete und in Fig. 2 durch schwarze Dreiecke eingezeichnete Streustruktur 06 angeordnet ist.

In dem mindestens einen von wenigstens einem Leuchtengehäuse 03 und zumindest einer Lichtscheibe 02 ganz oder teilweise umschlossenen Leuchteninnenraum 04 der Fahrzeugleuchte 01 ist zumindest ein mindestens eine Lichtquelle umfassendes Leuchtmittel für wenigstens eine Lichtfunktion der Fahrzeugleuchte ganz oder teilweise beherbergt.

Beim Blick von außerhalb des Leuchteninnenraums 04 auf die Vorderseite 24 der Lichtscheibe 02 oder durch diese hindurch, wird jede Lichtfunktion durch mindestens eine in Fig. 2 durch gestrichelt eingezeichnete Vierecke repräsentativ angedeutete Leuchtfläche 41, 42 derart verwirklicht, dass jeder Lichtfunktion zumindest während deren momentaner Erfüllung wenigstens eine Leuchtfläche 41, 42 zu deren Verwirklichung zur Verfügung steht.

Die Streustruktur 06 dient nunmehr bei der Fahrzeugleuchte 01 dazu, zumindest einen an die jeweilige Leuchtfläche 41, 42 angrenzenden Abschnitt des kurz als Schweißrand bezeichneten Bereichs zu hinterleuchten, welcher eine beim Blick von außerhalb des Leuchteninnenraums 04 auf die Vorderseite 24 der Lichtscheibe 02 die der Verbindung von Lichtscheibe 02 und Leuchtengehäuse 03 dienende Schweißnaht 05 überdeckende Partie 15 der Lichtscheibe 02, sowie gegebenenfalls einen über diese Partie 15 nach außen, weg von der vermittels der Lichtscheibe 02 verschlossenen Lichtöffnung im Leuchtengehäuse 03, innerhalb welcher Lichtöffnung die der Verwirklichung von Lichtfunktionen dienenden Leuchtflächen 41, 42 liegen, überstehenden Rand 16 umfasst.

Die die Schweißnaht 05 überdeckende Partie 15 der Lichtscheibe 02 kann wie in Fig. 3 dargestellt bis zu einer Breite einer gegebenenfalls auf der Rückseite 20 der Lichtscheibe 02 aufstehenden Schweißrippe 23 einnehmen, an deren der Lichtscheibe abgewandtem Ende die Lichtscheibe 02 mit dem Leuchtengehäuse 03 vermittels der Schweißnaht 05 stoffschlüssig verbunden ist.

Um den die mindestens eine eine oder mehrere Lichtfunktionen einer Fahrzeugleuchte verwirklichende Leuchtfläche 41, 42 umgebenden, kurz als Schweißrand bezeichneten Bereich einer Lichtscheibe 02 einer Fahrzeugleuchte 01, welcher den beim Blick von außerhalb des Leuchteninnenraums 04 auf die Lichtscheibe 02 die um die Lichtöffnung umlaufende Schweißnaht 05 der Verbindung zwischen Lichtscheibe 02 und Leuchtengehäuse 03 überdeckende Partie 15 sowie einen gegebenenfalls von dieser ausgehend nach außen, weg von der Lichtöffnung und der in dem die Lichtöffnung bedeckenden Teil der Lichtscheibe 02 befindlichen Leuchtfläche 41, 42 überstehenden Rand 16 umfasst, während der Erfüllung einer Lichtfunktion zumindest abschnittsweise an eine die Lichtfunktion verwirklichende Leuchtfläche 41, 42 angrenzend zu hinterleuchten, ist demnach bei einer Fahrzeugleuchte 01 mit mindestens einem wenigstens eine Lichtöffnung aufweisenden Leuchtengehäuse 03 und zumindest einer mittels einer um die Lichtöffnung ganz oder teilweise umlaufenden Schweißnaht 05 mit diesem verbundenen, die Lichtöffnung verschließenden Lichtscheibe 02 zumindest abschnittsweise eine in der Lichtscheibe 02 vor der um die Lichtöffnung umlaufenden Schweißnaht 05 bevorzugt nachträglich angeordnete Streustruktur 06 vorgesehen.

Die zumindest abschnittsweise Licht in Richtung eines auf die dem Leuchteninnenraum 04 abgewandte Vorderseite 24 der Lichtscheibe 02 blickenden Betrachters umlenkende Streustruktur 06 vergrößert die kurz als Leuchtfläche 41, 42 bezeichnete, der Verwirklichung von einer oder mehreren Lichtfunktionen der Fahrzeugleuchte 01 dienende leuchtende Fläche und kann damit sowohl zur Erfüllung der gesetzlichen Mindestanforderungen an die Größe der leuchtenden Fläche einer Lichtfunktion beitragen, als auch einer nachhaltigen Steigerung der Verkehrssicherheit durch Verbesserung der Sichtbarkeit und durch Verstärkung der Lichtabgabe in diese Richtung beitragen.

Eine vorteilhafte Ausgestaltung der Fahrzeugleuchte sieht vor, dass die Streustruktur durch so genanntes Laserinnenschweißen und/oder besonders bevorzugt durch Laserinnengravieren erzeugt beziehungsweise hergestellt ist.

Die Laserinnengravur besteht bevorzugt aus einer Vielzahl von beispielsweise separaten Innengravurpunkten. Jeder Innengravurpunkt liegt innerhalb des die Lichtscheibe 02 bildenden Körpers. In der Gesamtbetrachtung ergeben die Innengravurpunkte die auch als Lichtstreuungsstruktur bezeichnete Streustruktur 06.

Besonders bevorzugt ist die Streustruktur 06 nachträglich, das heißt nach dem Zusammenbau der Fahrzeugleuchte 01 erzeugt. Der Zusammenbau der Fahrzeugleuchte 01 ist durch Verbinden der Lichtscheibe 02 mit dem Leuchtengehäuse 03 durch deren Verschweißen miteinander entlang der um eine vermittels der Lichtscheibe 02 zu verschließenden beziehungsweise verschlossenen Lichtöffnung im Leuchtengehäuse 03 umlaufende Schweißnaht 05 abgeschlossen.

Vorzugsweise nach dem Zusammenbau und Verschweißen der Fahrzeugleuchte 01 wird mittels Laser die aufgrund ihrer lichtstreuenden Eigenschaft auch als Lichtstreuungsstruktur bezeichnete Streustruktur 06 in der Lichtscheibe 02 der Fahrzeugleuchte 01 erzeugt. Diese lichtstreuende Struktur liegt im Innern des Materialvolumens der Lichtscheibe 02. Die Oberfläche der Lichtscheibe 02 bleibt hierbei sowohl während, als auch nach der Einwirkung des Lasers unverändert. Die Streustruktur 06 überdeckt beim Blick auf die Leuchte einen Teilbereich der Schweißnaht 05 im diese aus Sicht eines von außerhalb des Leuchteninnenraums 04 auf die Vorderseite 24 der Lichtscheibe 02 blickenden Betrachters gesehen überdeckenden, kurz als Schweißrand bezeichneten Bereich der Lichtscheibe 02. Im so genannten Warmzustand bei vereinfacht ausgedrückt eingeschalteter Leuchte, wird von dieser eingebrachten Streustruktur Licht in Richtung des erwähnten Betrachters gestreut, so dass der Bereich vor der beispielsweise zwischen einer auf der dem Leuchteninnenraum 04 zugewandten Innenseite 20 der Lichtscheibe 02 aufstehenden Schweißrippe 23 und einem mit dieser korrespondierend ausgebildeten, um die Lichtöffnung umlaufenden Rand 33 des Leuchtengehäuses 03 ausgebildeten Schweißnaht 05 zumindest angrenzend an eine eine momentan benötigte Lichtfunktion zumindest zeitweilig verwirklichende Leuchtfläche 41, 42 angrenzend leuchtet.

Um den kurz als Schweißrand bezeichneten Bereich einer Lichtscheibe 02 einer Fahrzeugleuchte 01 mit:
- mindestens einem wenigstens eine Lichtöffnung aufweisenden Leuchtengehäuse 03, und
- zumindest einer mittels einer um die Lichtöffnung ganz oder teilweise umlaufenden Schweißnaht 05 mit diesem stoffschlüssig verbundenen, die Lichtöffnung verschließenden Lichtscheibe 02
zumindest abschnittsweise zu hinterleuchten, beispielsweise in Bezug auf die um die Lichtöffnung ganz oder teilweise umlaufende Schweißnaht 05 einen an eine Leuchtfläche 41, 42 angrenzenden Abschnitt des Schweißrands, ist demnach eine nachträglich in der Lichtscheibe 02 vor der um die Lichtöffnung umlaufenden Schweißnaht 05 zumindest abschnittsweise angeordnete Streustruktur 06 vorgesehen.

Der kurz als Schweißrand bezeichnete Bereich umfasst die beim Blick von außerhalb des Leuchteninnenraums 04 auf die Lichtscheibe 02 die um die Lichtöffnung umlaufende, das Leuchtengehäuse 03 mit der Lichtscheibe 02 verbindende Schweißnaht 05 überdeckende Partie 15 sowie einen gegebenenfalls über diese Partie 15 weg von der Lichtöffnung hinausgehenden Rand 16.

Beim Blick von außerhalb des Leuchteninnenraums 04 auf die Lichtscheibe 02 weist die Fahrzeugleuchte 01 demnach eine in der Lichtscheibe 02 zumindest abschnittsweise und wenigstens vor der um die Lichtöffnung umlaufenden Schweißnaht 05 nachträglich angeordnete Streustruktur 06 auf.

Die wegen ihrer Eigenschaft auch als Lichtstreuungsstruktur bezeichnete Streustruktur 06 ist bevorzugt nachträglich, das heißt nach der Verbindung der Lichtscheibe 02 mit dem Leuchtengehäuse 03 beispielsweise durch Herstellung der die Lichtscheibe 02 und Leuchtengehäuse 03 stoffschlüssig verbindenden Schweißnaht 05, besonders bevorzugt vermittels Laserinnengravur eingebracht.

Die bevorzugt aus einer Vielzahl von Innengravurpunkten bestehende Laserinnengravur ist nachträglich, das heißt nach der Herstellung der die Lichtscheibe 02 mit dem Leuchtengehäuse 03 stoffschlüssig verbindenden Schweißnaht 05 in wenigstens einen Abschnitt des kurz als Schweißrand bezeichneten, die die umlaufende Schweißnaht 05 der Verbindung zwischen Lichtscheibe 02 und Leuchtengehäuse 03 der Fahrzeugleuchte 01 überdeckende Partie 15 und einen gegebenenfalls über diese hinausgehenden Rand 16 umfassenden Bereich der Lichtscheibe 02 eingebracht, um die Lichtstreuungsstruktur zu bilden, durch welche Lichtstreuungsstruktur aus der Lichtöffnung austretendes Licht in den entsprechenden, mit der Streustruktur 06 versehenen Abschnitt des Schweißrands eingekoppelt und von dort aus in Richtung eines von außerhalb des Leuchteninnenraums 04 auf die Lichtscheibe 02 blickenden Betrachters gelenkt wird.

Ist die Streustruktur 06 vollständig um die Lichtöffnung umlaufend zumindest im gesamten Schweißrand angeordnet, beispielsweise indem zumindest im gesamten, vollständig um die Lichtöffnung umlaufenden Schweißrand die Streustruktur 06 bildende Innengravurpunkte vorzugsweise in Bezug auf die Herstellung der Schweißnaht 05 nachträglich erzeugt worden sind, so ergeben die Innengravurpunkte in der Gesamtbetrachtung eine Vielzahl von in dem an der Vorderseite 24 der Lichtscheibe 02 den Schweißrand umfassenden Teilvolumen der Lichtscheibe 02 liegenden, bei einer Betrachtung der Lichtscheibe 02 von außerhalb des Leuchteninnenraums 04 vor der Schweißnaht 05 befindlichen Streustellen oder -punkte, welche die gleichmäßige Verteilung des durch die ansonsten klare und zunächst auch in nur einem Spritzgusstakt klar hergestellte Lichtscheibe 02 hindurchtretenden Lichts über den gesamten, um die Lichtöffnung umlaufenden Schweißrand durch eine Streuung des Lichts begünstigen. Dementsprechend ausgeleuchtet erscheint der Schweißrand.

Das nachträgliche Einbringen der Streustruktur 06 insbesondere vermittels Laserinnengravur in den Schweißrand erlaubt die Anwendung des Laserdurchstrahlschweißens zur Herstellung der Schweißnaht 05 vor der Herstellung der Streustruktur 06 per Laserinnengravur.

Damit bleibt die kurz als Laserschweißbarkeit bezeichnete Möglichkeit erhalten, bei der Fahrzeugleuchte 01 die das Leuchtengehäuse 03 mit der Lichtscheibe 02 verbindenden Schweißnaht 05 vermittels Laserdurchstrahlschweißen durch die vor dem Einbringen der Streustruktur 06 klare, transparente Lichtscheibe 02 hindurch herzustellen.

Eine entsprechend weitergebildete, vorteilhafte Ausgestaltung der Fahrzeugleuchte 01 sieht demnach vor, dass die Lichtscheibe 02 und das Leuchtengehäuse 03 vermittels Laserdurchstrahlschweißen miteinander verbunden sind.

Damit die Streustruktur 06 Licht in Richtung Betrachter streut, so dass der Bereich vor der Schweißnaht 05 leuchtet, kann es vorteilhaft sein, Licht gezielt durch Lichteinkoppel- beziehungsweise Lichtumlenkstrukturen 25, wie etwa Prismen oder andere geeignete Geometrieelemente so in die Lichtscheibe 02 einzukoppeln, dass es durch Totalreflexion zu der bevorzugt eingelaserten Streustruktur 06 geleitet wird.

Beispielsweise zur Verbesserung der Einkopplung von aus der vermittels der Lichtscheibe 02 verschlossenen Lichtöffnung des Leuchtengehäuses 03 austretenden Lichts in den entsprechenden, mit der Streustruktur 06 versehenen Abschnitt des Schweißrands kann an der Lichtscheibe 02, beispielsweise an deren die Rückseite 20 bildenden, dem Leuchteninnenraum zugekehrter Innenseite, in Bezug auf um die Lichtöffnung umlaufend zumindest abschnittsweise eine Lichtumlenkstruktur 25 angeordnet sein, welche zur Erfüllung einer Lichtfunktion der Fahrzeugleuchte 01 vorgesehenes, aus der Fahrzeugleuchte 01 austretendes Licht in die Lichtscheibe 02 einkoppelt und in dieser, nämlich im Inneren der Lichtscheibe 02 beispielsweise durch Totalreflexion in Richtung der Streustruktur 06 leitet.

Hierdurch wird, wie in Fig. 3 anhand mehrerer exemplarisch eingezeichneter Lichtstrahlen 07 dargestellt, mehr Licht in den entsprechenden, mit der Streustruktur 06 versehenen Abschnitt des Schweißrands eingekoppelt und von dort aus in Richtung eines von außerhalb des Leuchteninnenraums 04 auf die Lichtscheibe 02 blickenden Betrachters gelenkt.

Die Streustruktur 06 dient hiernach wie bis hierher beschrieben zu einer in Bezug auf um die Lichtöffnung umlaufend zumindest abschnittsweisen Aus- beziehungsweise Hinterleuchtung des Schweißrands.

Die Streustruktur 06 nebst den voranstehend beschriebenen Merkmalen kann jedoch in Verbindung mit einer nachfolgend unter Bezugnahme auf Fig. 2 beschriebenen, in mehrere Teilleuchten 11, 12 mehrgeteilten Fahrzeugleuchte 01 darüber hinaus zur Verringerung einer eingangs und zuvor bereits zu Fig. 1 erwähnten dunklen Lücke eingesetzt werden, wie nachfolgend ausgeführt.

Die in Fig. 2 ganz oder in Teilen dargestellte Fahrzeugleuchte 01 ist in mehrere jeweils ein Teilleuchtengehäuse und wenigstens eine vermittels einer Schweißnaht 05 mit diesem stoffschlüssig verbundene Teillichtscheibe 21, 22 umfassende Teilleuchten 11, 12 mehrgeteilt, beispielsweise in eine erste Teilleuchte 11 und in eine zweite Teilleuchte 12 zweigeteilt.

Jede Teilleuchte 11, 12 umfasst einen von mindestens einem Teilleuchtengehäuse und wenigstens einer mit diesem vermittels einer Schweißnaht 05 stoffschlüssig verbundenen Teillichtscheibe 21, 22 ganz oder teilweise umgebenen Teilleuchteninnenraum. Ein jeder Teilleuchteninnenraum beherbergt zumindest ein Leuchtmittel zur Erfüllung und/oder zum Beitrag zu wenigstens einer Lichtfunktion der Fahrzeugleuchte 01. Die Fahrzeugleuchte 01 dient der Erfüllung wenigstens einer Lichtfunktion.

Jede Lichtfunktion wird dabei durch eine Leuchtfläche 41, 42 verwirklicht.

Beim Blick von außerhalb der Teilleuchteninnenräume auf die Teillichtscheiben 21, 22 ist wenigstens eine Lichtfunktion der Fahrzeugleuchte 01 zumindest zeitweilig durch mindestens zwei beim Blick von außerhalb der Teilleuchteninnenräume auf die Teillichtscheiben 21, 22 oder durch diese hindurch sichtbare Leuchtflächen 41, 42 zeitgleich verwirklicht.

Vereinfacht ausgedrückt wird zumindest ein und dieselbe Lichtfunktion der Fahrzeugleuchte 01 zumindest zeitweilig mittels zweier in verschiedenen Teilleuchten 11, 12 beherbergter Leuchtflächen 41, 42 zeitgleich verwirklicht.

Die zumindest eine Lichtfunktion der Fahrzeugleuchte 01 zumindest zeitweilig zeitgleich verwirklichenden Leuchtflächen 41, 42 sind in zumindest zwei verschiedenen Teilleuchten 11, 12 der Fahrzeugleuchte 01 beherbergt und über eine Fuge 13 zwischen den aneinander angrenzend angeordneten Teilleuchten 11, 12 hinweg unmittelbar benachbart.

Eine erfindungsgemäße, in Fig. 2 ganz oder teilweise dargestellte, als Heckleuchte ausgeführte, zweigeteilte Fahrzeugleuchte 01 besteht aus zwei Teilleuchten 11, 12, einer auch als Seitenwandleuchte 17 bezeichneten, zur Anordnung in der Seitenwand eines Fahrzeugs vorgesehenen ersten Teilleuchte 11 und einer auch als Heckdeckelleuchte 18 bezeichneten, zur Anordnung im Heckdeckel des Fahrzeugs vorgesehenen zweiten Teilleuchte 12. Jede der beiden bei geschlossenem Heckdeckel über eine Fuge 13 zwischen den beiden Teilleuchten 11, 12 hinweg nebeneinander am Fahrzeug angeordneten Teilleuchten 11, 12 umfasst einen von einem eigenen Teilleuchtengehäuse und einer eigenen Teillichtscheibe 21, 22 ganz oder teilweise umschlossenen Teilleuchteninnenraum. In jedem Teilleuchteninnenraum sind ein oder mehrere Leuchtmittel zur Erfüllung und/oder zum Beitrag zu einer oder mehreren Lichtfunktionen der jeweiligen Teilleuchte 11, 12 und/oder der beide Teilleuchten 11, 12 umfassenden Fahrzeugleuchte 01 ganz oder teilweise beherbergt.

Jede Lichtfunktion wird dabei durch eine Leuchtfläche 41, 42 verwirklicht. Zumindest eine Lichtfunktion der Fahrzeugleuchte 01 wird zumindest zeitweilig mittels zweier in verschiedenen Teilleuchten 11, 12 beherbergter Leuchtflächen 41, 42 zeitgleich verwirklicht.

In Fig. 2 ist dies am Beispiel einer Schlusslichtfunktion dargestellt. Gestrichelt eingezeichnete Vierecke in den Teillichtscheiben 21, 22 der beiden Teilleuchten 11, 12 stellen repräsentativ zwei die Schlusslichtfunktion zumindest zeitweilig zeitgleich verwirklichende Leuchtflächen 41, 42 dar, von denen die eine Leuchtfläche 41 in der ersten Teilleuchte 11 und die andere Leuchtfläche 42 in der zweiten Teilleuchte 12 beherbergt ist.

Die Teilleuchten 11, 12 sind zumindest einseitig um eine Fuge 13 zwischen deren Teillichtscheiben 21, 22 beabstandet nebeneinander angeordnet. Bei mehreren Teilleuchten 11, 12 ist auch eine mehrseitige, jeweils um eine Fuge 13 zwischen den Teillichtscheiben 21, 22 beabstandete Anordnung neben- und/oder umeinander möglich.

Die wenigstens zwei in verschiedenen Teilleuchten 11, 12 der Fahrzeugleuchte 01 beherbergten, über eine Fuge 13 zwischen den Teilleuchten 11, 12 hinweg unmittelbar benachbarten Leuchtflächen 41, 42 verwirklichen zumindest zeitweilig ein und dieselbe Lichtfunktion der Fahrzeugleuchte 01 zeitgleich, beispielsweise die Schlusslichtfunktion. Die zeitgleiche Verwirklichung kann - ohne Anspruch der nachfolgenden Aufzählung auf Vollständigkeit - beispielsweise durch eine momentane Erfüllung einer zur Fahrtrichtungsanzeige dienenden Wiederholblinklichtfunktion, während deren Erfüllung die beispielsweise betroffene Leuchtfläche 41 wiederholt von Dunkelphasen unterbrochen wiederkehrend gelb aufleuchtet, oder durch eine momentane Erfüllung einer Bremslichtfunktion, während deren Erfüllung die beispielsweise betroffene Leuchtfläche 41 unter deutlich hellerer Lichtabgabe rot aufleuchtet, unterbrochen sein.

Bei der in mehrere Teilleuchten 11, 12 mehrgeteilten Fahrzeugleuchte 01 ist zumindest in denjenigen die die Teillichtscheiben 21, 22 mit den Teilleuchtengehäusen verbindenden Schweißnähte 05 überdeckenden Bereichen der Teillichtscheiben 21, 22, an welche angrenzend sich die zumindest zeitweilig ein und dieselbe Lichtfunktion der Fahrzeugleuchte 01 zeitgleich verwirklichenden Leuchtflächen 41, 42 befinden, aus Sicht eines auf die dem Leuchteninnenraum 04 abgewandten Vorderseiten 24 der Teillichtscheiben 21, 22 blickenden Betrachters gesehen vor den Schweißnähten 05 die Streustruktur 06 im Inneren des Lichtscheibenmaterials der betroffenen Teillichtscheiben 21, 22 angeordnet.

Sind zwei in verschiedenen Teilleuchten 11, 12 beherbergte Leuchtflächen 41, 42 entlang einer Seite über die Fuge 13 hinweg benachbart, ist zumindest in jedem die Schweißnaht 05 überdeckenden Bereich der beiden Teillichtscheiben 21, 22, der zwischen den beiden Leuchtflächen 41, 42 liegt, die Streustruktur 06 im Inneren des Lichtscheibenmaterials angeordnet.

Kommt es nun am Beispiel der Schlusslichtfunktion repräsentativ erläutert zu einer zumindest zeitweiligen, zeitgleichen Erfüllung ein und dieselben Lichtfunktion vermittels den in den beiden Teilleuchten 11, 12 beherbergten, bei geschlossenem Heckdeckel über die Fuge 13 hinweg benachbarten Leuchtflächen 41, 42, so entsteht zwischen den über die Fuge 13 hinweg benachbarten, die Lichtfunktion in der ersten Teilleuchte 11 und in der zweiten Teilleuchte 12 gleichzeitig momentan erfüllenden Leuchtflächen 41, 42 eine dunkle Lücke.

Diese dunkle Lücke fällt wesentlich kleiner aus als beim Stand der Technik, da sie dank der zumindest abschnittsweisen Ausleuchtung des
- die beim Blick von außerhalb der Teilleuchteninnenräume 04 auf die Vorderseiten 24 der Teillichtscheiben 21, 22 die der Verbindung von Teillichtscheiben 21, 22 und Teilleuchtengehäusen dienenden Schweißnähte 05 überdeckenden Partien 15 der Teillichtscheiben 21, 22,
   sowie gegebenenfalls
- einen oder mehrere über diese Partien 15 nach außen, weg von den vermittels der Teillichtscheiben 21, 22 verschlossenen Lichtöffnungen in den Teilleuchtengehäusen, innerhalb welcher Lichtöffnungen die der zeitgleichen Verwirklichung ein und derselben Lichtfunktionen dienenden, jedoch in unterschiedlichen Teilleuchten 1, 12 beherbergten Leuchtflächen 41, 42 liegen, überstehende Ränder 16
umfassenden, kurz des sich aus den Partien 15 und dem oder den Rändern 16 ergebenden Schweißrands vermittels der Streustruktur 06 lediglich durch die Fuge 13 zwischen der Seitenwandleuchte 17 und der Heckdeckelleuchte 18 gebildet ist.

Es ist ersichtlich, dass durch die in den Schweißrändern der Teilleuchten 11, 12, zumindest in den zwischen den Leuchtflächen 41, 42 liegenden Bereichen der Schweißränder, eingebrachte Streustruktur 06, die nichtleuchtende Lücke zwischen zwei der selben Lichtfunktion beitragenden oder die selbe Lichtfunktion erfüllenden, jedoch in unterschiedlichen unmittelbar benachbarten Teilleuchten 11, 12 beherbergten Leuchtflächen 41, 42 im Warmdesign, beispielsweise zwischen Heckdeckelleuchte 18 und Seitenwandleuchte 17 einer in die beiden entsprechend ausgebildeten Teilleuchten 11, 12 zweigeteilten, als Heckleuchte ausgebildeten Fahrzeugleuchte 01 im Vergleich zum Stand der Technik auf das die Breite der Fuge 13 angebende Spaltmaß verringert wird.

Durch eine mit der Erweiterung der jeweiligen Leuchtflächen 41, 42 bis zur Fuge 13 hin einhergehende Vergrößerung der Leuchtfläche trägt die Streustruktur 06 dazu bei, dass der maximal gesetzlich zulässige Abstand zwischen zwei in unterschiedlichen Teilleuchten 11, 12 beherbergten, zumindest zeitweilig ein und die selbe Lichtfunktion zeitgleich verwirklichender Leuchtflächen 41, 42 eingehalten wird.

Wichtig ist an dieser Stelle hervorzuheben, dass sowohl die einzelnen im vorliegenden Dokument erwähnten Merkmale, als auch die zu den einzelnen im vorliegenden Dokument erwähnten Merkmalen angegebenen Vorteile sowohl für die Ausgestaltung der Fahrzeugleuchte 01 als eine Leuchte mit einem von einem Leuchtengehäuse 03 und einer mit diesem vermittels einer Schweißnaht 05 stoffschlüssig verbundenen Lichtscheibe 02, als auch als eine in mehrere Teilleuchten 11, 12 mehrgeteilte Leuchte mit mehreren von jeweils einem Teilleuchtengehäuse und mit diesen vermittels jeweils einer Schweißnaht 05 stoffschlüssig verbundenen Teillichtscheiben 21, 22 zutreffen, ebenso wie die zu einer der genannten Ausgestaltungen beschriebenen Merkmale in Verbindung mit der anderen Ausgestaltung Anwendung finden können.

Eine vorteilhafte Weiterbildung sämtlicher voranstehend beschriebenen Ausgestaltungen der erfindungsgemäßen Fahrzeugleuchte 01 sieht vor, dass die Streustruktur 06 vom Lichtscheibenrand nach innen hin, zumindest bis über die Schweißnaht 05 variiert.

Eine solche Variation dient beispielsweise der Erzeugung einer gleichmäßigen Abnahme der Leuchtstärke, welche bei der Verwirklichung einer Lichtfunktion im Bereich der Leuchtfläche 41, 42 am höchsten ist, weg von der Leuchtfläche 41, 42 hin zum Rand der Lichtscheibe. Eine solche, einer Abnahme der Leuchtstärke dienende Variation, ist in Fig. 2 durch die durch schwarz eingezeichnete Dreiecke angedeutete Streustruktur 06 dargestellt. Die Dreiecke symbolisieren dabei zugleich sowohl die Streudichte, als auch die bevorzugt eingelaserte Streustruktur 06 bildende und/oder von dieser umfasste, bevorzugt eingelaserte Streuzentren. Dabei ist die Streustruktur 06 derart variiert, dass die Leuchtstärke einhergehend mit einer zunehmenden Breite der schwarz eingezeichneten Dreiecke vom Rand der Leuchtfläche 41, 42 hin zum Rand der jeweiligen Lichtscheibe 02 beginnend mit einem Maximalwert am Rand der jeweiligen Leuchtfläche 41, 42 zum Rand der Lichtscheibe 02 hin abnimmt.

Die beispielsweise durch Einwirkung mittels Laserstrahlung erzeugte Streustruktur 06 kann beispielsweise aus zahlreichen lichtstreuenden zylinderförmigen Bereichen im Lichtscheibenmaterial zusammengesetzt sein. Um ein homogen leuchtendes Erscheinungsbild zu erhalten, kann es vorteilhaft sein, die Stärke der Lichtstreuung ortsabhängig zu variieren. Beispielsweise kann die Lichtstreuung Richtung Lichtscheibenrand kontinuierlich zunehmen. Technisch kann dies beispielsweise durch unterschiedlich lange und/oder unterschiedlich dicht platzierte lichtstreuende Zylinderstrukturen erreicht werden. Auch die Tiefe und/oder Achsrichtung, mit der die lichtstreuenden Zylinderstrukturen in die Lichtscheibe 02 oder Teillichtscheibe 21, 22 eingebracht werden, kann variiert werden, um ein homogenes Erscheinungsbild im so genannten Warmzustand zu erhalten.

Die beispielsweise durch eine Achslage bestimmbare Ausrichtung und die Dichte der kurz als Streuzylinder bezeichneten lichtstreuenden Zylinderstrukturen beeinflusst die Richtungsverteilung des abgestrahlten Lichts. Die Streuzylinder werden bei einer als Heckleuchte ausgeführten Fahrzeugleuchte 01 bevorzugt so eingebracht, dass möglichst viel des Lichts nach Fahrzeughinten in Richtung der Fahrzeuglängsachse gestreut wird.

Durch eine insbesondere per nachträglicher Laserinnengravur mögliche Variation der Streustruktur vom Lichtscheibenrand zur Schweißnaht hin, kann ein kontinuierlicher Übergang zwischen transparenter Lichtscheibe 02 oder Teillichtscheibe 21, 22 und streuendem Bereich am Lichtscheibenrand erhalten werden.

Als Material für die Lichtscheibe 02 und/oder die Teillichtscheiben 21, 22 kommt vorteilhaft PMMA und PC zur Anwendung.

Die Fahrzeugleuchte 01 kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung oder in den noch folgenden Ansprüchen erwähnte Merkmale aufweisen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Fahrzeugleuchte
- 02: Lichtscheibe
- 03: Leuchtengehäuse
- 04: Leuchteninnenraum
- 05: Schweißnaht
- 06: Streustruktur
- 07: Lichtstrahl
- 11: erste Teilleuchte
- 12: zweite Teilleuchte
- 13: Fuge
- 15: Partie (Lichtscheibe)
- 16: Rand (Lichtscheibe)
- 17: Seitenwandleuchte
- 18: Heckdeckelleuchte
- 20: Rückseite (Lichtscheibe)
- 21: Teillichtscheibe
- 22: Teillichtscheibe
- 23: Schweißrippe (Lichtscheibe)
- 24: Vorderseite (Lichtscheibe)
- 25: Lichtumlenkstruktur
- 33: Rand (Leuchtengehäuse)
- 41: Leuchtfläche
- 42: Leuchtfläche
- 100: Fahrzeugleuchte
- 110: erste Teilleuchte
- 111: Seitenwandleuchte
- 112: Teillichtscheibe
- 120: zweite Teilleuchte
- 121: Heckdeckelleuchte
- 122: Teillichtscheibe
- 130: Fuge
- 131: nichtleuchtender Bereich
- 141: Leuchtfläche
- 142: Leuchtfläche
- 150: die Schweißnaht überdeckende Partie
- 160: überstehender Rand

## Patentansprüche

1. Fahrzeugleuchte (01) mit einem von einer Lichtscheibe (02) und einem Leuchtengehäuse (03) wenigstens teilweise umschlossenen Leuchteninnenraum (04), wobei das Leuchtengehäuse (03) und die Lichtscheibe (02) an der dem Leuchtengehäuse (03) zugewandten Rückseite (20) der Lichtscheibe (02) durch eine Schweißnaht (05) miteinander verbunden sind, und wobei im Inneren des Lichtscheibenmaterials eine Streustruktur (06) aus Sicht eines auf die dem Leuchteninnenraum (04) abgewandte Vorderseite (24) der Lichtscheibe (02) blickenden Betrachters gesehen vor der Schweißnaht (05) angeordnet ist.

2. Fahrzeugleuchte nach Anspruch 1, wobei die Streustruktur (06) durch Laserinnengravieren erzeugt ist.

3. Fahrzeugleuchte nach Anspruch 1 oder 2, wobei die Streustruktur (06) nach dem durch Verbinden der Lichtscheibe (02) mit dem Leuchtengehäuse (03) erfolgten Zusammenbau der Fahrzeugleuchte (01) erzeugt ist.

4. Fahrzeugleuchte nach Anspruch 1, 2 oder 3, wobei die Lichtscheibe (02) und das Leuchtengehäuse (03) durch Laserdurchstrahlschweißen miteinander verbunden sind.

5. Fahrzeugleuchte nach einem der Ansprüche 1 bis 4, wobei an der Lichtscheibe (02) eine Lichtumlenkstruktur (25) angeordnet ist, welche Licht in Richtung der Streustruktur (06) leitet.

6. Fahrzeugleuchte nach einem der voranstehenden Ansprüche, wobei sie in mehrere jeweils ein Teilleuchtengehäuse und wenigstens eine vermittels einer Schweißnaht (05) mit diesem verbundene Teillichtscheibe (21, 22) umfassende Teilleuchten (11, 12, 17, 18) mehrgeteilt ist, und mindestens zwei beim Blick von außerhalb des Leuchteninnenraums auf die Lichtscheibe (02, 21, 22) oder durch diese hindurch sichtbare Leuchtflächen (41, 42) in zumindest zwei verschiedenen Teilleuchten (11, 12, 17, 18) der Fahrzeugleuchte (01) beherbergt und über eine Fuge (13) zwischen den Teilleuchten (11, 12, 17, 18) hinweg benachbart sind, wobei:
- die Leuchtflächen (41, 42) zumindest zeitweilig ein und dieselbe Lichtfunktion der Fahrzeugleuchte (01) zeitgleich verwirklichen, und
- zumindest in denjenigen die die Teillichtscheiben (21, 22) mit den Teilleuchtengehäusen verbindenden Schweißnähte (05) überdeckenden Bereichen der Teillichtscheiben (21, 22), an welche angrenzend sich die Leuchtflächen (41, 42) befinden, im Inneren des Lichtscheibenmaterials der betroffenen Teillichtscheiben (21, 22) die Streustruktur (06) aus Sicht eines auf die dem Leuchteninnenraum (04) abgewandte Vorderseite (24) der Lichtscheibe (02) blickenden Betrachters gesehen vor der Schweißnaht (05) angeordnet ist.

7. Fahrzeugleuchte nach einem der voranstehenden Ansprüche, wobei die Streustruktur (06) vom Lichtscheibenrand nach innen hin variiert.
